# EUROPÄISCHE PATENTANMELDUNG

(11) **EP 2 146 295 A1**
(43) Veröffentlichungstag der Anmeldung: **20.01.2010**
(21) Anmeldenummer: 08012770.7
(22) Anmeldetag: 15.07.2008
(51) Int. Cl.: G06F 19/00

(54) **Verfahren und Anordnung zur Modellierung von soziodemographischen Eigenschaften**

(71) Anmelder: Wunderloop media services Gmbh, 20099 Hamburg (DE)
(72) Erfinder: Horst, Dietrich c/o wunderloop media services GmbH, 20099 Hamburg (DE)
(74) Vertreter: Glawe, Delfs, Moll

(57) **Zusammenfassung**

Die Erfindung betrifft ein Verfahren zur Modellierung von soziodemographischen Eigenschaften, sowie eine Anordnung zur Durchführung dieses Verfahrens. Das Verfahren ist **dadurch gekennzeichnet, dass** sowohl dem Inhalt (21), der von Nutzern abgerufen werden kann, als auch den dafür genutzten Clients (10) je ein Profil mit soziodemographischen Eigenschaften zugeordnet ist. Bei Abruf eines Inhalts (21) durch einen Client (10) können sowohl das Client-Profil (41) als auch das Seiten-Profil (51) des Inhalts (21) mit den Informationen aus dem jeweils anderen Profil aktualisiert werden.

## Beschreibung

Die Erfindung betrifft ein Verfahren zur Modellierung von soziodemographischen Eigenschaften, insbesondere für die Verwendung im Internet. Darüber hinaus betrifft die Erfindung eine Anordnung zur Durchführung des erfindungsgemäßen Verfahrens.

Beim Schalten von Werbung besteht zunehmend der Bedarf, Werbung nur noch Mitgliedern einer bestimmen Zielgruppe zu präsentieren, bei denen eine hohe Akzeptanz erwartet werden kann. Durch zielgruppenspezifische Werbung sollen Streuverluste vermindert werden, die entstehen wenn Werbung Nichtinteressierten außerhalb der Zielgruppe präsentiert wird.

Bei der Definition von Zielgruppen kann auf soziodemographische Eigenschaften, wie bspw. Alter, Geschlecht, Einkommensverhältnisse, etc., zurückgegriffen werden. Auch gemeinsame Interessen der Mitglieder einer Zielgruppe können in den soziodemographischen Eigenschaften enthalten sein. In der Regel stehen für die Mitglieder einer Zielgruppe Informationen über die soziodemographischen Eigenschaften nur für eine kleine Stichprobe zur Verfügung.

Im Internet können einzelne Personen in der Regel nicht eindeutig identifiziert werden. Lediglich die Identifikation der für den Internetzugang genutzten Clients ist zweifelsfrei möglich, bspw. durch Browser-Cookies. Allerdings ist es möglich, dass sich mehrere Personen, die zu unterschiedlichen Zielgruppen gehören, einen Client teilen, oder dass eine Person auf mehrere Clients Zugriff hat.

Die Stichprobe mit bekannten soziodemographischen Eigenschaften besteht meist aus Clients, die per Fragebogen auf bestimmte Merkmale befragt wurden, oder solchen, die in einem Anmeldeprozess Daten an den Betreiber eines Internetangebotes geliefert haben. Insbesondere letztere stehen aber in der Regel nur dem Betreiber des anmeldepflichtigen Internetangebotes zur Verfügung und können von Betreibern anderer Internetangebote nicht genutzt werden.

Es sind Verfahren bekannt, um die Informationen über die soziodemographischen Eigenschaften der Stichprobe auf die gesamte Zielgruppe zu übertragen. Bei diesen Verfahren handelt es sich um klassische multivariate Klassifikationsmethoden (logistische Regression, Entscheidungsbaum, etc.), die relativ statisch sind. Sie haben daher den Nachteil, dass bei verändertem Verhalten der Clients oder bei dynamischen Inhalten die Qualität der Schätzung nicht stabil ist. Die Dynamik des Verhaltens und der Inhalte sind aber typisch für Internetangebote.

Für die statistischen Klassifikationsverfahren sind außerdem Variablen maßgeblich, die eine sehr detaillierte Inhaltsanalyse der Internetangebote erfordern. Diese Inhaltsanalyse ist Voraussetzung für das Erstellen von Interessensprofilen für die Clients. Die Interessensprofile wiederum sind die Variablen, mit denen die statistische Klassifikation durchgeführt wird. Der Aufwand einer Inhaltsanalyse ist jedoch sehr hoch und selten mit ausreichender Qualität verfügbar.

Mit den bekannten Verfahren kann nicht festgestellt werden, ob ein Client von mehreren Personen genutzt wird. Die Informationen über den Client sind entweder auf einen einzigen Nutzer abgestimmt oder bilden eine nicht repräsentative Vermischung soziodemographischer Eigenschaften aller Nutzer eines Clients.

Ziel der vorliegenden Erfindung ist es, ein Verfahren zu schaffen, dass die Nachteile der im Stand der Technik bekannten Verfahren nicht oder nur in geringerem Maße aufweist. Gelöst wird diese Aufgabe durch das Verfahren gemäß dem Hauptanspruch. Vorteilhafte Weiterbildungen ergeben sich aus den abhängigen Ansprüche 2 bis 15.

Die Erfindung betrifft ein Verfahren zur Modellierung von soziodemographischen Eigenschaften, gekennzeichnet durch die folgenden Merkmale:
a) einem nutzerseitigen Client ist auf einer serverseitigen Datenbank ein Client-Profil umfassend soziodemographische Eigenschaften zugeordnet;
b) von Nutzern abrufbaren Daten ist auf einer serverseitigen Datenbank ein Seiten-Profil umfassend soziodemographische Eigenschaften zugeordnet;
c) die Güte des Client-Profils wird bestimmt;
d) die Güte des Seiten-Profils wird bestimmt;
e) beim Abruf von Daten durch einen Nutzer werden die soziodemographischen Eigenschaften des Client-Profils des nutzerseitigen Clients durch soziodemographischen Eigenschaften des Seiten-Profils abhängig von der Güte des Client- und des Seiten-Profils aktualisiert; und
f) beim Abruf von Daten durch einen Nutzer werden die soziodemographischen Eigenschaften des Seiten-Profils der vom Nutzer abgerufenen Daten durch soziodemographische Eigenschaften des Client-Profils des nutzerseitigen Clients abhängig von der Güte des Client- und des Seiten-Profils aktualisiert.

Ein weiteres Ziel der Erfindung ist die Schaffung einer Anordnung zur Durchführung des erfindungsgemäßen Verfahrens. Gelöst wird diese Aufgabe durch eine Anordnung gemäß dem unabhängigen Anspruch 16. Vorteilhafte Weiterbildungen ergeben sich aus den abhängigen Ansprüche 17 bis 19.

Demnach betriff die Erfindung eine Anordnung zur Durchführung eines Verfahrens zur Modellierung von soziodemographischen Eigenschaften, gekennzeichnet durch die folgenden Merkmale:
a) ein mit einem Datenfernübertragungsnetz verbundener, betreiberseitiger Server;
b) ein mit dem Datenfernübertragungsnetz verbundener, nutzerseitiger Client;
c) wenigstens ein mit dem Datenfernübertragungsnetz verbundener Server mit darauf abgelegten und von dem nutzerseitigem Client abrufbaren Inhalten;
d) eine dem betreiberseitigem Server zugeordnete Datenbank mit Seiten-Profilen der abrufbaren Inhalte;
e) eine dem betreiberseitigem Server zugeordnete Datenbank mit Client-Profilen der nutzerseitigen Clients;
f) eine dem betreiberseitigem Server zugeordnete Vorrichtung zur Bestimmung der Güte der Seiten-Profile und der Client-Profile; und
g) eine dem betreiberseitigem Server zugeordnete Vorrichtung zum Vergleich und Aktualisierung eines Seiten-Profils und eines Client-Profils abhängig von der Güte des Seiten-Profils und des Client-Profils beim Abruf des zum Seiten-Profils zugehörigen Inhalts durch den zum Client-Profil zugehörigen Clients.

Das erfindungsgemäße Verfahren ermöglicht es, Informationen über soziodemographische Eigenschaften einer Stichprobe von Clients - des sog. Training-Sets - auf Clients ohne solche Informationen zu übertragen. Dabei werden die Client-Profile von Clients ohne Informationen mit Informationen aus den Client-Profilen der Clients aus der Stichprobe auf der Basis ähnlichen Verhaltens angereichert. Auch Clients mit Client-Profilen, die bereits Informationen enthalten, können weiter angereichert und/oder angepasst werden. In dem die Client-Profile nicht statisch sind, sondern immer wieder aktualisiert werden, können Veränderung des Nutzungsverhaltens zeitnah berücksichtigt werden.

Erfindungsgemäß ist vorgesehen, dass von den Clients abrufbare Inhalte ein Seiten-Profil aufweisen. Dieses Seiten-Profil wird mit den Informationen aus den Client-Profilen der Clients, die den zugehörigen Inhalt abrufen, angereichert. Beispielsweise wird ein Seiten-Profil eines Inhaltes, welcher hauptsächlich von Clients mit der soziodemographischen Eigenschaft "männlich" abgerufen wird, entsprechende Informationen enthalten. Ein Client, bei dessen Client-Profil die soziodemographische Eigenschaft des Geschlechtes noch nicht festgelegt ist, kann die Eigenschaft "männlich" von dem Seiten-Profil des abgerufenen Inhaltes erben.

Das Erben bzw. Vererben von Informationen ist bevorzugt gewichtet und von der Güte sowohl des Client- als auch des Seiten-Profils abhängig. Das Seiten-Profil lässt sich beispielsweise aufgrund der Streuung der Informationen der Client-Profile der abrufenden Clients ermitteln. Ein Seiten-Profil eines Inhalts, der praktisch nur von der Altersgruppe "20-29" abgerufen wird, weist für diese Eigenschaft eine hohe Güte auf. Der Begriff "Güte" im Sinne dieser Anmeldung bezieht sich nicht auf die Güte eines Profils als Ganzes, sondern auf die Güte der einzelnen im Profil abgespeicherten Informationen. Bei der Ermittlung der Güte eines Profils ist es daher bevorzugt, wenn die Güte aller im Profil abgespeicherten soziodemographischen Eigenschaften einzeln bestimmt wird.

Die Güte der Client-Profile lässt sich ähnlich bestimmen: ein Client der praktisch nur zum Abruf von Inhalten mit Seiten-Profilen, in denen die soziodemographischen Eigenschaft "weiblich" definiert ist, hat bei seinem Client-Profil eine hohe Güte der entsprechenden Eigenschaft "weiblich". Client-Profile die mit Informationen aus Fragebögen etc. angereichert sind, weisen in den betreffenden Eigenschaften zumindest eine gewisse Zeit nach dem Ausfüllen des Fragebogens eine hohe Güte auf. Bevorzugt ist es, wenn dazu ab und an wenigstens ein Teil der Client-Profile durch Informationen aus Nutzerbefragungen wenigstens teilweise aktualisiert wird.

In der Regel ist vorgesehen, dass ein Client-Profil mit hoher Güte Informationen über soziodemographische Eigenschaften eher an ein Seiten-Profil mit geringer Güte vererbt; ein Seiten-Profil mit hoher Güte vererbt eher an ein Client-Profil mit geringer Güte.

Da ein Seiten-Profil völlig unabhängig von dem eigentlichen abrufbaren Inhalt erstellt und aktualisiert wird, ist eine aufwändige Inhaltsanalyse wie im Stand der Technik nicht notwendig. Das erfindungsgemäße Verfahren eignet sich auf für solche Inhalte, die sich mit bekannten Methoden nicht oder nur sehr schwierig analysiseren lassen, wie z.B. Audio-/Video- oder interaktive Inhalte, bei denen bspw. eine vergleichsweise einfache Textanalyse nicht durchgeführt werden kann.

Anhand der Güte des Client-Profils kann auch festgestellt werden, ob der Client von der Person, für die das Client-Profil erstellt wurde, oder von einer weiteren Person genutzt wird. Enthält ein Client-Profil mit hoher Güte bspw. die soziodemographische Eigenschaft "weiblich" und wird mit dem dazugehörigen Client kurzfristig wiederholt Inhalt mit der Eigenschaft "männlich" abgerufen, so kann dies auf die Nutzung eines Clients durch wenigsten zwei Personen hinweisen. Die Güte des Client-Profils kann dann herabgesetzt werden. Es kann aber auch vorgesehen sein, dass für mehrere Nutzer eines Clients verschiedene Client-Profile angelegt werden können.

Aufgrund der dynamischen Anpassung der Client- und Seiten-Profile können die Stichproben geringer ausfallen als beim bekannten Stand der Technik. Außerdem ist es möglich, dass die Client-Profile von mehreren Anbietern von Inhalten gemeinsam genutzt werden. Die Client-Profile sind anonym und unterliegen damit - anders als Anmeldedaten bei einem Anbieter etc. - keinen strengen Datenschutzrichtlinien. Die Qualität der Client-Profile kann durch die gemeinsame Nutzung von mehreren Inhaltsanbietern stark verbessert werden.

Die Clients können beispielsweise durch Cookies identifiziert werden. Jeder Cookie enthält dabei in der Regel lediglich eine ID, die einem bestimmten Client zugeordnet ist. Weitere Informationen über den Nutzer (Namen, etc.) sind nicht notwendig. Durch das Löschen des Cookies, kann die Zuordnung eines Clients aufgehoben werden. Der Client kann dann ein neues Cookie mit neuer ID, und somit auch eine neues Client-Profil, erhalten; das vorherige Client-Profil wird aufgrund des gelöschten Cookies mit der dazugehörigen ID nicht mehr abgerufen und kann gelöscht werden. Können Nutzer anderweitig eindeutig identifiziert werden (z.B. durch Log-In), handelt es sich bei den Client-Profilen um Nutzer-Profile. Der Begriff "Client-Profil" im Sinne dieser Anmeldung umfasst auch tatsächlich nutzerspezifische Profile.

Jeder abrufbare Inhalt erhält ebenfalls eine ID, mit der ein Seiten-Profil zugeordnet werden kann. Wird ein Inhalt gelöscht und demnach nicht mehr abgerufen, kann auch das dazugehörige Seiten-Profil gelöscht werden.

Es ist bevorzugt, wenn die vom Nutzer abgerufenen Daten an sein Client-Profil angepasst werden. So ist es bspw. möglich die Werbeflächen auf abgerufenen Internetseiten entsprechend den soziodemographischen Eigenschaften des Clients bzw. den Interessen dessen Nutzers anzupassen. Diese Anpassung erstreckt sich nicht nur auf die gezielte Platzierung von Werbung auf Internetseiten, sondern umfasst z.B. auch das Einspielen von nutzerspezifischer Werbung in einen Video- oder Audio-Stream bzw. -Download. Im Übrigen kann auch die Reaktion auf präsentierte Werbung - z.B. das Klicken auf einen Werbebanner - in das Client-Profil einfließen. Das erfindungsgemäße Verfahren ist aber nicht nur auf den Bereich der Werbung beschränkt. Beispielweise können auch Nachrichteninhalte anhand eines Client-Profils so angepasst werden, dass die Inhalte entsprechend der soziodemographischen Eigenschaften des vermeintlichen Nutzers angeordnet werden.

Zur weiteren Verbesserung des Verfahrens können Sitzungs-Profile vorgesehen sein. Bei einem Sitzungs-Profil handelt es sich um ein Profil mit soziodemographischen Eigenschaften ähnlich dem Client-Profil. Ein Sitzungs-Profil kann beim Einloggen eines Clients ins Internet oder dem ersten Abrufen von einem Inhalt mit Seiten-Profil erstellt werden und ist, wie das Client-Profil, einem Client zuordenbar. Bei seiner Erstellung kann das Sitzungs-Profil die Eigenschaften des Client-Profils desselben Client übernehmen. Die oben beschriebene Anpassung der soziodemographischen Eigenschaften aufgrund der Seiten-Profile des während der Sitzung abgerufenen Inhalts wird am Sitzungs-Profil vorgenommen. Nach Beendigung der Sitzung (z.B. durch Ausloggen des Clients oder durch Zeitablauf) wird die Güte des Sitzungs-Profils bestimmt. Dies kann entweder aufgrund der Informationen im Sitzungs-Profil an sich oder aber durch Vergleich bzw. Bestimmung der Abweichung von Sitzungs- und Client-Profil erfolgen. Je nach Güte des Sitzung- und des Client-Profils kann das Client-Profil mit den Informationen aus dem Sitzungs-Profil aktualisiert werden.

Weiterhin ist bevorzugt, dass Sitzungs-Profile von einer oder mehrerer Sitzungen auf einer serverseitigen Datenbank gespeichert werden und einem Client-Profil zugeordnet werden. Durch die Analyse mehrerer Sitzungsprofile kann so z.B. festgestellt werden, ob ein Client von mehreren Nutzern mit unterschiedlichen soziodemographischen Eigenschaften verwendet wird. In einem solchen Fall kann die Güte des Client-Profils herabgesetzt werden. Es ist aber beispielweise auch möglich, dass sich anhand der Sitzungs-Profile die gemeinsame Nutzung eines Clients von einer männlichen und einer weiblichen Person feststellen lässt. Es ist dann möglich, für den Client zwei Client-Profile - je eines pro Nutzer - anzulegen und die Client-Profile mit entsprechend geprägten Sitzungs-Profilen zu aktualisieren: das Client-Profil des weiblichen Nutzers wird nur mit Sitzungs-Profilen, die auf den weiblichen Nutzer schließen lassen, aktualisiert, während das Client-Profil des männlichen Nutzers nur mit entsprechend geprägten Sitzungs-Profile aktualisiert wird.

Die Abweichung eines Sitzungs-Profils vom Client-Profil desselben Client kann in einen statistischen Standardfehler einfließen. Abhängig von der Abweichung im Hinblick auf den Standardfehler kann die Güte des Sitzungs-Profils bestimmt werden. Auch die Bestimmung der Güte des Client-Profils ist anhand des statistischen Standardfehlers möglich: Je geringer der Standardfehler für einen Client ausfällt, umso höher ist die Güte des Client-Profils. Der statistische Standardfehler kann auch zur oben angesprochenen Feststellung der Nutzung eines Clients durch zwei oder mehr Nutzer verwendet werden.

Wird von einem Client ohne Client-Profil erstmals ein Inhalt mit einem Seiten-Profil abgerufen, so wird bevorzugt ein neues Client-Profil angelegt, welches dann aktualisiert werden kann. Dazu ist es ggf. notwendig einen Cookie, der den Client identifizierbar macht, im Client zu setzen.

Werden Cookies mit IDs oder Inhalte mit ID gelöscht, können automatisch die Client- oder Seiten-Profile nicht mehr aktualisiert und/oder abgerufen werden. Es ist daher bevorzugt, Profile, die über einen längeren Zeitraum - vorzugsweise 2 Monate - nicht mehr aktualisiert und/oder abgerufen werden, zu löschen. Dies schafft Platz für neue Client- und/oder Seiten-Profile.

Zur Erläuterung der erfindungsgemäßen Anordnung wird auf die vorstehende Beschreibung des dazugehörigen Verfahrens verwiesen.

Weitere Einzelheiten der Erfindung ergeben sich aus der nachfolgenden Beschreibung zu den beigefügten Zeichnungen. Die Zeichnungen zeigen:
- Fig. 1: eine erstes Ausführungsbeispiel einer erfindungsge- mäßen Anordnung zur Durchführung des erfindungsge- mäßen Verfahrens;
- Fig. 2: einen beispielhaften Aufbau eines Profils;
- Fig. 3: ein Verfahrensdiagramm zur Funktionsweise des betreiberseitigen Servers aus Fig. 1;
- Fig. 4: eine alternative Ausführungsform des betreibersei- tigen Servers aus Fig. 1; und
- Fig. 5: eine beispielhafte Verteilung von Wahrscheinlich- keitswerten einer soziodemographischen Eigenschaft über mehrere Sitzungs-Profile.

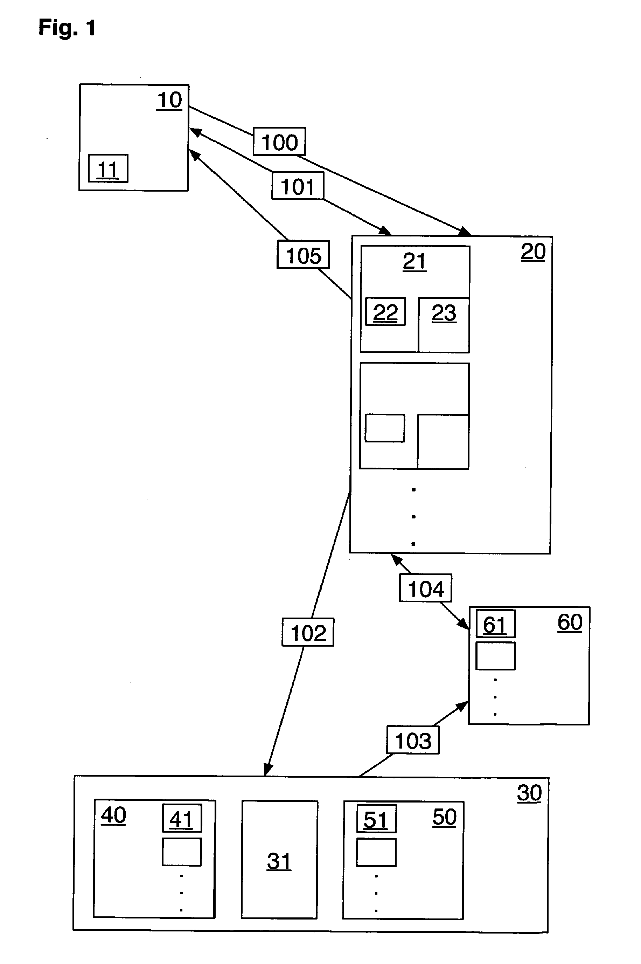

Fig. 1 zeigt ein erstes Ausführungsbeispiel der erfindungsgemäßen Anordnung, die zur Durchführung des erfindungsgemäßen Verfahrens geeignet ist. Die Anordnung umfasst einen Client 10, einen Server 20 mit darauf abgelegten, abrufbaren Inhalten 21, einen betreiberseitigen Server 30 und einen weiteren Server 60.

Der Client 10 und die Server 20, 30 sind durch ein nicht dargestelltes Datenfernübertragungsnetzwerk, bspw. das Internet, miteinander vernetzt und können untereinander Daten austauschen. An dieses Netzwerk können noch weitere Clients 10 oder Server 20, 30 angeschlossen sein. Insbesondere die abrufbaren Inhalte 21 können auf mehrere Server 20 verteilt sein. Ebenso können aber die Server 20, 30 und 60 in einem einzigen Server zusammengefasst werden.

Sowohl dem Client 10 als auch den abrufbaren Inhalten 21 ist je eine ID 11, 22 zugeordnet. Beim Client 10 kann es sich beispielsweise um einen Web-Browser handeln, bei dem die ID 11 in Form eines Cookies hinterlegt ist. Die IDs 22 für die abrufbaren Inhalte 21 können - je nach Form des Inhaltes 21 - beispielsweise als Tags in HTML-, Audio- oder Videodateien gespeichert werden. Es ist aber auch möglich, dass die ID 22 der Adresse, über die der Inhalt 21 über das Datenfernübertragungsnetz erreicht und abgerufen werden kann, gleicht. Im Falle des Internets als Datenfernübertragungsnetz könnte es sich also um die URL oder URI des Inhalts 21 handeln. Der Inhalt 21 weist einen Freiraum 23 auf, in den weiterer Inhalt eingefügt werden kann. Bei Webseiten kann es sich beispielsweise um unbelegte Werbeflächen, bei Videoinhalten um freie Werbeblöcke handeln.

Der betreiberseitige Server 30 umfasst eine Datenbank 40 für Client-Profile 41 und eine Datenbank 50 für Seitenprofile 51. Weiterhin umfasst der Server 30 eine Rechnereinheit 31, der auf die beiden Datenbanken 40, 50 zugreifen kann.

Der Client 10 ist dazu ausgebildet, die Inhalte 21 vom Server 20 über das Datenfernübertragungsnetzwerk abzurufen. Dazu sendet er eine entsprechende Anfrage 100 an den Server 20. Im Stand der Technik ist bekannt, dass bevor Daten vom Server 20 zum Client 10 übermittelt werden, die Inhalte von Cookies des Client 10 vom Server 20 abgefragt werden können. Dies ist in Fig. 1 durch den Pfeil 101 dargestellt. Beim Server 20 liegen demnach sowohl die ID 11 des Clients, als auch die ID 22 des vom Client 10 abgerufenen Inhalts 21 vor.

Sowohl die ID 11 des Clients 10, als auch die ID 22 des abgerufenen Inhalts 21 werden an den betreiberseitigen Server 30 übermittelt. Dies ist in Fig. 1 als Pfeil 102 dargestellt.

Der Prozessor 31 des Servers 30 ist in der Lage, anhand der Client-ID 11 aus der Datenbank 40 das zur ID 11 gehörige Client-Profil 41 abzurufen und entlang des Pfeils 103 an den Server 60 zu übermitteln.

Der Prozessor 31 in der Lage das zum Seiten-ID 22 des Inhalts 21 gehörige Seiten-Profil 51 aus der entsprechenden Datenbank 50 abzurufen. Sowohl das Client-Profil 41 als auch das Seiten-Profil 51 können vom Prozessor 31 aktualisiert werden. Eine detaillierte Beschreibung dieses Aktualisierungsvorgangs folgt unten. Ob die Aktualisierung vor oder nach der Übermittlung 103 des Client-Profils 41 an den Server 60 geschieht ist beliebig.

Anhand des Client-Profils 41 wird ein Werbepaket 61 ausgewählt und an den Server 20 entlang des Kommunikationsweges 104 übermittelt. Es ist selbstverständlich, dass bei Vorhandensein mehrerer Freiraume 23 in einem Inhalt 21 mehrere Werbepakete 61 an den Server 20 übermittelt werden. Es sind verschiedene Möglichkeiten denkbar, wie die Anzahl der benötigten Werbepakete 61 dem Server 60 mitgeteilt werden kann. Beispielsweise kann diese Information mit der Client-ID 11 und der Seiten-ID 22 vom Server 20 an den Server 30 geleitet werden (Pfad 102) und von dort aus an den Server 60 übermittelt werden (Pfad 103). Es ist auch möglich, dass der Server 20 nach Erhalt eines ersten Werbepaketes 61 in Zusammenhang mit einer Client-ID 11 noch ein weiteres über den Pfad 104 anfordert. Die Auswahl der Werbepakete 61 muss dabei nicht unbedingt ausschließlich von der Client-ID 11 abhängen. Auch die Seiten-ID 22 kann berücksichtigt werden. Dies kann insoweit nützlich sein, als dass ein Werbetreibender gerade sein Werbepaket 61 nicht in Zusammenhand mit besonderen Inhalten 21 sehen möchte. Es ist auch möglich, dass die Werbepakete 61 on-the-fly erstellt werden, z.B. als Collage mehrerer Anzeigen oder Zusammenstellung mehrerer Werbespots zu einem Werbeblock.

Die vom Server 60 erhaltenen Werbepakete 61 werden vom Server 20 in die Freiräume 23 des angeforderten Inhalts 21 eingefügt. Danach wird der Inhalt 21 mit Werbepaket 61 an den Client 10 übermittelt (Pfeil 105) und dort angezeigt, abgespielt, etc.

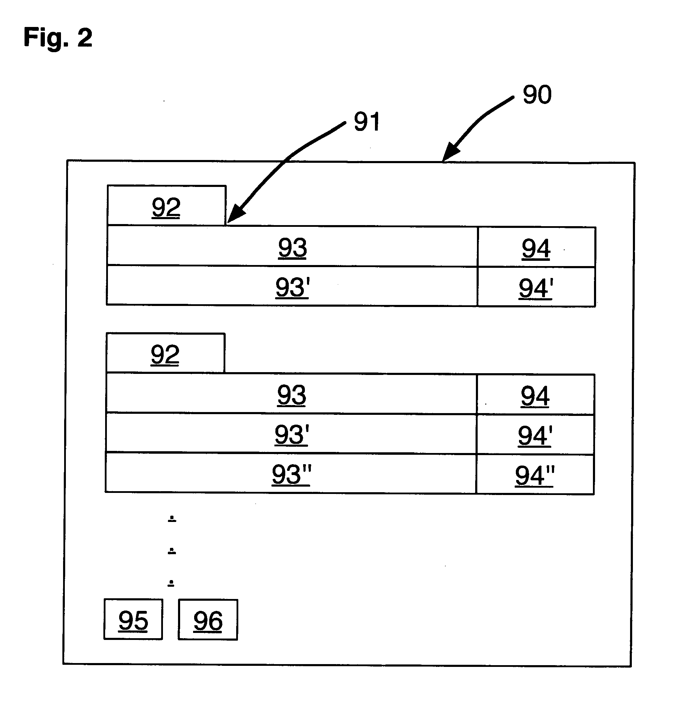

In Fig. 2 ist ein beispielhaftes Profil 90 dargestellt. Dabei ist es unerheblich, ob es sich um ein Client- 41 oder ein Seiten-Profil 51 handelt, da beide einen vergleichbaren Aufbau haben und vergleichbare Informationen beinhalten.

Das Profil 90 weist mehrere Informationsblöcke 91 auf. Jeder dieser Blöcke beschreibt eine soziodemographische Eigenschaft und ist über seinen Titel 92 definiert. Jedem Informationsblock 91 sind darüber hinaus die möglichen Werte 93, 93', 93" der über den Titel 92 definierten soziodemographische Eigenschaft zugeordnet. Jedem Wert 93, 93', 93" ist ein Wahrscheinlichkeitsfaktor 94, 94', 94" zugeordnet. Die Wahrscheinlichkeitsfaktoren 94, 94', 94" sagen aus, wie wahrscheinlich es ist, dass die soziodemographische Eigenschaft unter dem Titel 92 auch tatsächlich auf das Profil 90 zutrifft. Näheres hierzu findet sich unten bei der Erläuterung zur Aktualisierung von Profilen.

Das Profil 90 enthält weiterhin noch ein Datenfeld 95 über die Anzahl der am Profil 90 durchgeführten Aktualisierungen, sowie ein Datenfeld 96 über das Datum der letzten Profilaktualisierung aufgrund eines Fragebogen o.ä.

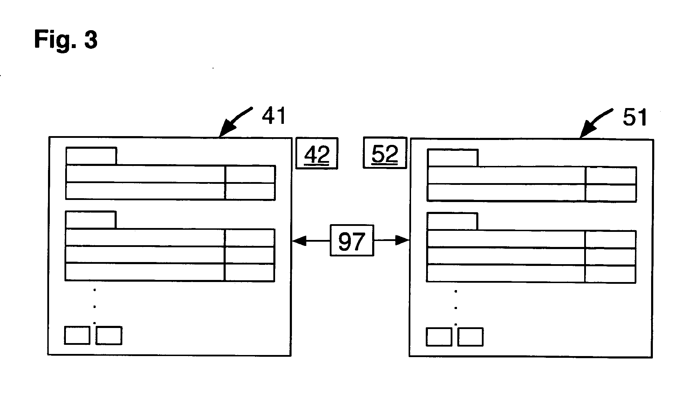

In Fig. 3 wird die Aktualisierung von Profilen, wie sie vom Prozessor 31 durchgeführt wird, schematisch dargestellt.

Der Prozessor 31 ermittelt anhand der Client-ID 11 und der Seiten-ID 22 die dazugehörigen Profile 41, 51 (siehe oben). Beide Profile 41, 51 haben den Aufbau des Profils 90 aus Fig. 2.

Zunächst wird die Güte 42, 52 sowohl des Client-Profils 41, als auch des Seiten-Profils 51 ermittelt. Dabei wird die Wahrscheinlichkeitsfaktoren 94, 94', 94" der möglichen Werte 93, 93', 93" jedes Titels 92, sowie die zusätzlichen Datenfelder ausgewertet. Dies soll an der soziodemographischen Eigenschaft mit dem Titel 92 "Geschlecht" verdeutlicht werden. Die möglichen Werte 93, 93' unter diesem Titel lauten "männlich" oder "weiblich".

Bei einem Client-Profil 41, bei dem der Wahrscheinlichkeitsfaktor 94, 94' für eines der beiden Geschlechter eindeutig ausfällt, besitzt für diese soziodemographische Eigenschaft eine grundsätzlich höhere Güte 42 als eines mit ausgeglichenem Verhältnis der beiden Wahrscheinlichkeitsfaktor 94, 94'. Die Güte 42 ist weiter abhängig von der Anzahl der Aktualisierungen 95; je häufiger das Profil 41 aktualisiert wurde, desto kleiner wird der Fehler bei der Einschätzung betreffend das Geschlecht. Ein Profil 41, bei dem das Datum einer Erhebung 96 nicht weit zurückliegend ist, wird bei entsprechender Abfrage bei der Erhebung eine sehr hohe Güte 42 bei der Spezifikation des Geschlechtes aufweisen.

Bei Seiten-Profilen 51, wird die Güte 52 weniger über die Eindeutigkeit des Verhältnisses der beiden Wahrscheinlichkeitsfaktor 94, 94' bestimmt, als über die Anzahl der Aktualisierungen 95, die mit der Anzahl der Abrufe des dazugehörigen Inhaltes 21 vergleichbar ist. Ein Seiten-Profil 51, welches aufgrund tausender Aktualisierungen bestimmte Wahrscheinlichkeitsfaktoren 94. 94' aufweist, wird grundsätzlich höher in seiner Güte 52 bewertet als ein Seiten-Profil 51 mit wenigen Aktualisierungen.

Selbstverständlich kann die Güte 42, 52 der einzelnen soziodemographischen Eigenschaften bei Profilen 41, 51 detaillierter bestimmt werden. Eine solche verbesserte Gütebestimmung erhöht die Qualität der Ergebnisse des gesamten Verfahrens.

Nach der Bestimmung der Güte 42, 52 der Profile 41, 51 vom Client 10 und Inhalt 21 werden die einzelnen soziodemographischen Eigenschaften der beiden Profile 41, 51 untereinander verglichen und aufgrund ihrer jeweiligen Güte aktualisiert (Pfeil 97).

Weist bspw. das Client-Profil 41 einen sehr hohen Wahrscheinlichkeitswert 94 für ein Geschlecht auf und besitzt darüber hinaus noch eine hohe Güte 42 (bspw. aufgrund von Erhebungen, s.o.) kann der entsprechende Wahrscheinlichkeitswert eines Seiten-Profils 51 mit geringerer Güte 52 erhöht werden. Andersherum kann ein Seiten-Profil 51, welches mit hoher Güte 52 ein Abruf des dazugehörigen Inhalts 21 von Personen eines Geschlechts (ermittelbar über die entsprechenden Client-Profile 41) hinweist, diese Information an ein Client-Profil 41 mit geringer Güte 42 vererben. Dabei werden die Wahrscheinlichkeitswerte 94, 94', 94" des erbenden Profils nicht mit denen des vererbenden Profils überschrieben, sondern vielmehr eine Gewichtung aufgrund der Güte 42, 52 der beiden Profile 41, 51 vorgenommen.

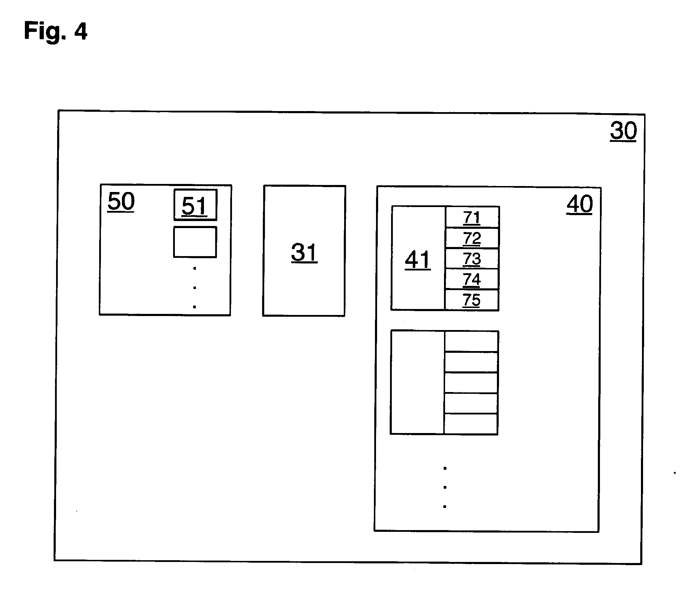

Der betreiberseitige Server 30 in Fig. 4 unterscheidet sich von dem Server aus Fig. 1 darin, dass den Client-Profilen 41 Sitzungs-Profile 71-75 zugeordnet sind. Diese Sitzungsprofile 71-75 sind in die Datenbank 40 der Client-Profile 41 integriert. Sie können aber auch in einer eigenen, weiteren Datenbank abgespeichert werden, sofern sie weiterhin eindeutig einem Client-Profil 41 (z.B. anhand der Client-ID 11) zugeordnet werden können.

Die Sitzungs-Profile 71-75 repräsentieren das Verhalten des zum Client-Profil 41 zugeordneten Clients 10 während der letzten - in diesem Beispiel - fünf Sitzungen. Eine Sitzung kann dabei durch Zeitabschnitte (1 Stunde, 1 Tag, etc.) oder durch den Vorgang des Ein- und Ausloggen eines Clients 11 in das Datenfernübertragungsnetz definiert sein.

Zu Beginn jeder Sitzung wird das älteste der vorhandenen Sitzungs-Profile gelöscht und durch ein neues 71 ersetzt. Das neue Sitzungsprofil 71 kann dabei zunächst ohne Informationen bleiben oder durch die Informationen aus dem zugehörigen Client-Profil 41 angereichert werden.

Die oben beschriebene Vorgehensweise bei der Aktualisierung von Profilen wird beibehalten, allerdings werden Aktualisierungen von Informationen über den Client 10 nicht im Client-Profil 41 sondern im aktuellen Sitzungsprofil 71 abgespeichert. Nach Beendigung der Sitzung kann die Güte des Sitzungs-Profils 71 bestimmt werden und bei ausreichender Güte in das Client-Profil 41 einfließen. Hierbei gilt ähnliches wie beim Vererben von Informationen zwischen Seiten- 51 und Client-Profilen 41.

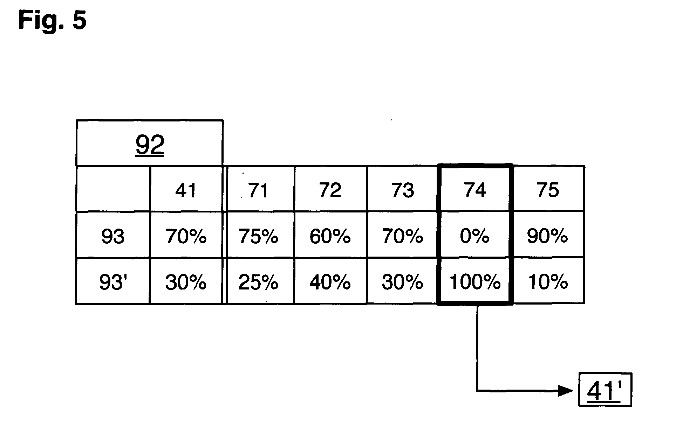

Die Güte des aktuellen Sitzungs-Profils 71 lässt sich ähnlich wie beim Client-Profil 41 bestimmen. Es ist aber auch möglich, die Güte durch den Abstand zwischen Sitzungs-Profil 71 und dem dazugehörigen Client-Profil 41 zu bestimmen. Außerdem eignet sich hierfür auch der Vergleich mit den weiteren Sitzungs-Profilen 72-75. Die Tabelle in Fig. 5 verdeutlicht dies.

In Fig. 5 ist für den soziodemographischen Wert mit dem Titel 92 die Wahrscheinlichkeitsfaktoren 94, 94', 94" der möglichen Werte 93, 93', 93'' im Client-Profil 41, sowie in den Sitzungs-Profilen 71-75 dargestellt.

Die Güte jedes einzelnen Sitzungs-Profils 71-75 lässt sich anhand des Abstandes vom Client-Profil 41 bestimmen. Demnach hätte das Sitzungs-Profil 73 die höchste Güte, während Sitzungs-Profil 74 die geringste Güte aufweist. Bei Integration der Sitzungs-Profile 71-75 ins Client-Profil 41 wird dies berücksichtigt. Ähnliche Güteverteilungen erhält man auch durch Bildung der Standardabweichung aller Sitzungs-Profil 71-75 und ähnlicher Methoden. Die Güte der Sitzungs-Profile 71-75 kann dabei noch von weiteren Faktoren abhängen, wie z.B. der Länge der Sitzung.

Bei Speicherung mehrerer Sitzungs-Profile 71-75 ist es außerdem möglich festzustellen, ob ein Client 10 von mehreren Personen benutzt wird. In diesem Beispiel deutet das Sitzungsprofil 74 auf die Benutzung des Clients 10 durch eine andere Person als bei den anderen Sitzungs-Profilen 71-73, 75 hin. Bei der Aktualisierung des Client-Profils 41 kann daher Sitzungs-Profil 74 ausgeschlossen werden. Für die Person des Sitzungs-Profils 74 kann aber ein weiteres Client-Profil 41' angelegt werden; je nach Sitzungs-Profil kann dann eines der beiden Client-Profile 41, 41' aktualisiert werden.

Bei der Aktualisierung der Client-Profile 41, 41' werden in der Regel die einzelnen Informationen zu soziodemographischen Eigenschaften nicht getrennt voneinander betrachtet. Vielmehr wird eine gemeinsame (evtl. gewichtete) Betrachtung vorgenommen.

## Patentansprüche

1. Verfahren zur Modellierung von soziodemographischen Eigenschaften, **gekennzeichnet durch** die folgenden Merkmale:
a) einem nutzerseitigen Client ist auf einer serverseitigen Datenbank ein Client-Profil umfassend soziodemographische Eigenschaften zugeordnet;
b) von Nutzern abrufbaren Daten ist auf einer serverseitigen Datenbank ein Seiten-Profil umfassend soziodemographische Eigenschaften zugeordnet;
c) die Güte des Client-Profils wird bestimmt;
d) die Güte des Seiten-Profils wird bestimmt;
e) beim Abruf von Daten **durch** einen Nutzer werden die soziodemographischen Eigenschaften des Client-Profils des nutzerseitigen Clients **durch** soziodemographischen Eigenschaften des Seiten-Profils abhängig von der Güte des Client- und des Seiten-Profils aktualisiert; und
f) beim Abruf von Daten **durch** einen Nutzer werden die soziodemographischen Eigenschaften des Seiten-Profils der vom Nutzer abgerufenen Daten **durch** soziodemographische Eigenschaften des Client-Profils des nutzerseitigen Clients abhängig von der Güte des Client- und des Seiten-Profils aktualisiert.

2. Verfahren nach Anspruch 1, **gekennzeichnet durch** den zusätzliche Verfahrensschritt:
g) die vom Nutzer abgerufenen Daten werden an das Client-Profil des nutzerseitigen Clients angepasst;
wobei die Anpassung der vom Nutzer abgerufenen Daten vorzugsweise das Einbringen von Werbung abhängig vom Client-Profil umfasst.

3. Verfahren nach Anspruch 1 oder 2, **dadurch gekennzeichnet, dass**
a) beim Abruf von Daten durch einen Nutzer während einer Sitzung die soziodemographischen Eigenschaften der Seiten-Profile in einem Sitzungs-Profil erfasst werden;
b) nach Beendigung der Sitzung die Güte des Sitzungs-Profils und/oder die Abweichung des Sitzungs-Profil vom Client-Profil ermittelt wird;
c) das Client-Profil durch das Sitzungs-Profil abhängig von der Güte des Client- und des Sitzungs-Profils, und/oder der Abweichung von Client- und Sitzungs-Profil aktualisiert wird;
wobei vorzugsweise die Sitzungs-Profile einer oder mehrerer Sitzungen in einer serverseitigen Datenbank gespeichert und einem Client-Profil zugeordnet werden, und/oder die Abweichung eines Sitzungs-Profils vom Client-Profil in einen statistischen Standardfehler einfließt, der bevorzugt zur Bestimmung der Güte eines Sitzungs-Profils genutzt wird.

4. Verfahren nach Anspruch 3, **dadurch gekennzeichnet, dass** anhand der Sitzungs-Profile oder dem statistischen Standardfehler die Güte des Client-Profils ermittelt wird.

5. Verfahren nach einem der Ansprüche 3 oder 4, **dadurch gekennzeichnet, dass** anhand der Sitzungs-Profile und/oder des statistischen Standardfehlers die Nutzung eines Clients durch zwei oder mehr Nutzer festgestellt werden kann, wobei vorzugsweise für einen Client mit zwei oder mehr Nutzern mehrere Client-Profile angelegt werden, die je nach Sitzungs-Profil aktualisiert werden.

6. Verfahren nach einem der vorigen Ansprüche, **dadurch gekennzeichnet, dass** die Ermittlung der Güte und Abweichungen von Profilen die Ermittlung der Güte und Abweichungen der einzelnen soziodemographischen Eigenschaften eines Profils umfasst.

7. Verfahren nach einem der vorigen Ansprüche, **dadurch gekennzeichnet, dass** beim Abruf von Daten mit einem Seiten-Profil durch einen Client ohne zugeordnetem Client-Profil ein Client-Profil in der serverseitigen Datenbank angelegt wird.

8. Verfahren nach einem der vorigen Ansprüche, **dadurch gekennzeichnet, dass** wenigstens ein Teil der Client-Profile in der serverseitigen Datenbank durch Informationen aus Nutzerbefragungen wenigstens teilweise aktualisiert wird.

9. Verfahren nach einem der vorigen Ansprüche, **dadurch gekennzeichnet, dass** die soziodemographischen Eigenschaften Alter, Altersgruppe, Geschlecht und/oder Einkommensverhältnisse umfassen.

10. Verfahren nach einem der vorigen Ansprüche, **dadurch gekennzeichnet, dass** die vom Nutzer abrufbaren Daten Internetseiten umfassen.

11. Verfahren nach einem der vorigen Ansprüche, **dadurch gekennzeichnet, dass** ein Client-Profil, welches über einen längeren Zeitraum, vorzugsweise 2 Monate, nicht mehr abgerufen wurde, gelöscht wird.

12. Anordnung zur Durchführung eines Verfahrens zur Modellierung von soziodemographischen Eigenschaften, **gekennzeichnet durch** die folgenden Merkmale:
a) Ein mit einem Datenfernübertragungsnetz verbundener, betreiberseitiger Server (30);
b) Ein mit dem Datenfernübertragungsnetz verbundener, nutzerseitiger Client (10);
c) Wenigstens ein mit dem Datenfernübertragungsnetz verbundener Server (20) mit darauf abgelegten und von dem nutzerseitigem Client (10) abrufbaren Inhalten (21);
d) Eine dem betreiberseitigem Server (30) zugeordnete Datenbank (50) mit Seiten-Profilen (51) der abrufbaren Inhalte (21);
e) Eine dem betreiberseitigem Server (30) zugeordnete Datenbank (40) mit Client-Profilen (41) der nutzerseitigen Clients (10);
f) Eine dem betreiberseitigem Server (30) zugeordnete Vorrichtung zur Bestimmung der Güte der Seiten-Profile (51) und der Client-Profile (41);
g) Eine dem betreiberseitigem Server (30) zugeordnete Vorrichtung zum Vergleich und Aktualisierung eines Seiten-Profils (51) und eines Client-Profils (41) abhängig von der Güte des Seiten-Profils (51) und des Client-Profils (41) beim Abruf des zum Seiten-Profils (51) zugehörigen Inhalts (21) **durch** den zum Client-Profil (41) zugehörigen Clients (10).

13. Anordnung nach Anspruch 12, **dadurch gekennzeichnet, dass** der betreiberseitige Server (30) eine Vorrichtung zur Anpassung der abgerufenen Inhalte (21) an das Client-Profil (41) des abrufenden Clients (10) aufweist.

14. Anordnung nach Anspruch 12 oder 13, **dadurch gekennzeichnet, dass** der betreiberseitige Server (30) eine Datenbank für Sitzungs-Profile (71-75) zur Erfassung der soziodemographischen Eigenschaften der Seiten-Profile (51) der in einer Sitzung abgerufenen Inhalte (21) aufweist, wobei der betreiberseitige Server (30) zur Ermittlung der Güte des Sitzungs-Profils (71-75) und/oder die Abweichung des Sitzungs-Profil (71-75) vom Client-Profil (41), sowie der Aktualisierung des Client-Profils (41) durch das Sitzungs-Profil (71-75) abhängig von der Güte des Client- (41) und des Sitzungs-Profils (71-75), und/oder der Abweichung von Client- (41) und Sitzungs-Profil (71-75) ausgebildet ist.

15. Anordnung nach Anspruch 12, 13 oder 14, **dadurch gekennzeichnet, dass** die Anordnung zur Durchführung eines Verfahren gemäß den Ansprüchen 4 bis 15 ausgebildet ist.
